# EUROPÄISCHE PATENTSCHRIFT

(11) **EP 1 599 274 B1**
(45) Veröffentlichungstag und Bekanntmachung des Hinweises auf die Patenterteilung: **27.12.2006**
(21) Anmeldenummer: 04705012.5
(22) Anmeldetag: 24.01.2004
(51) Int. Cl.: B01D 53/14, C10L 3/10, C07C 7/11, C10K 1/14, C10G 21/20, B01D 11/04

(54) **ABSORPTIONSMITTEL UND VERFAHREN ZUR ENTFERNUNG SAURER GASE AUS FLUIDEN**
ABSORBING AGENT AND METHOD FOR ELIMINATING ACID GASES FROM FLUIDS
AGENT ABSORBANT ET PROCEDE POUR ELIMINER DES GAZ ACIDES PRESENTS DANS DES FLUIDES

(30) Priorität: 14.02.2003 DE 10306254
(43) Veröffentlichungstag der Anmeldung: 30.11.2005
(73) Patentinhaber: BASF Aktiengesellschaft, 67056 Ludwigshafen (DE)
(72) Erfinder: GROSSMANN, Christoph, The Woodlands, TX 77381 (US); ASPRION, Norbert, 68163 Mannheim (DE)
(86) Internationale Anmeldenummer: PCT/EP2004/000601
(87) Internationale Veröffentlichungsnummer: WO 2004/071624

(56) Entgegenhaltungen:
- EP-A- 0 581 026
- DE-A- 2 134 379
- US-A- 4 336 233
- US-A- 5 620 940

## Beschreibung

Die vorliegende Erfindung betrifft ein Absorptionsmittel und ein Verfahren zur Entfernung saurer Gase aus Fluiden.

In zahlreichen Prozessen der chemischen Industrie treten Fluidströme auf, die Sauergase, wie z.B. CO₂, H₂S, SO₂, CS₂, HCN, COS oder Mercaptane als Verunreinigungen enthalten. Bei diesen Fluidströmen kann es sich beispielsweise um Gasströme (wie Erdgas, Synthesegas aus Schweröl oder schweren Rückständen, Raffineriegas oder bei der partiellen Oxidation von organischen Materialien, wie beispielsweise Kohle oder Erdöl, entstehende Reaktionsgase) oder um flüssige oder verflüssigte Kohlenwasserstoffströme (wie LPG (liquified petroleum gas) oder NGL (natural gas liquids)) handeln. Bevor diese Fluide transportiert oder weiterverarbeitet werden können, muss der Sauergasgehalt des Fluids deutlich reduziert werden. CO₂ muss beispielsweise aus Erdgas entfernt werden, da eine hohe Konzentration von CO₂ den Brennwert des Gases reduziert. Außerdem kann CO₂ in Verbindung mit dem in Fluidströmen häufig mitgeführten Wasser zu Korrosion an Leitungen und Armaturen führen.

Die Entfernung von Schwefelverbindungen aus diesen Fluidströmen ist aus unterschiedlichen Gründen von besonderer Bedeutung. Beispielsweise muss der Gehalt an Schwefelverbindungen von Erdgas durch geeignete Aufbereitungsmaßnahmen unmittelbar an der Erdgasquelle reduziert werden, denn auch die Schwefelverbindungen bilden mit dem vom Erdgas häufig mitgeführten Wasser Säuren, die korrosiv wirken. Für den Transport des Erdgases in einer Pipeline müssen daher vorgegebene Grenzwerte der schwefelhaltigen Verunreinigungen eingehalten werden. Darüber hinaus sind zahlreiche Schwefelverbindungen bereits in niedrigen Konzentrationen übelriechend und, insbesondere Schwefelwasserstoff, toxisch.

Es ist bekannt, die unerwünschten sauren Gasbestandteile aus den Fluiden durch Gaswäsche oder durch flüssig/flüssig-Extraktion mit wässrigen oder nicht wässrigen Gemischen organischer Lösungsmittel als Absorptionsmittel zu entfernen. Dabei kommen sowohl physikalische als auch chemische Lösungsmittel in Betracht. Bekannte physikalische Lösungsmittel sind beispielsweise Cyclotetramethylensulfon (Sulfolan), N-Methylpyrrolidon und N-alkylierte Piperidone. Bei den chemischen Lösungsmitteln haben sich insbesondere die wässrigen Lösungen von primären, sekundären und tertiären aliphatischen Aminen bzw. Alkanolaminen wie Monoethanolamin (MEA), Diethanolamin (DEA), Monomethylethanolamin (MMEA), Diethylethanolamin (DEEA), Triethanolamin (TEA), Diisopropanolamin (DIPA) und Methyldiethanolamin (MDEA) technisch bewährt. Primäre und sekundäre Amine können mit CO₂ unter Bildung von Carbamaten reagieren.Die Bildung von Carbamaten erfolgt in der Regel in einer schnellen Reaktion.

Im Gegensatz zu primären und sekundären Alkanolaminen reagieren tertiäre Alkanolamine nicht direkt mit CO₂, da das Amin voll substituiert ist. Vielmehr wird CO₂ in einer langsamen Reaktion mit dem tertiären Alkanolamin und mit Wasser zu Bicarbonat umgesetzt. Tertiäre Amine eignen sich daher insbesondere für eine selektive Entfernung von H₂S aus Gasgemischen, die CO₂ und H₂S enthalten. Wegen der langsamen Reaktion des Kohlendioxids muss bei der Gaswäsche der Waschprozess mit tertiären Alkanolaminlösungen mit einem hohen Flüssigkeit/Gas-Verhältnis bei entsprechend hohem Lösungsmittelumlauf durchgeführt werden. Daher wurde versucht, die Absorptionsrate von CO₂ in wässrigen Lösungen von tertiären Alkanolaminen durch Zugabe weiterer Verbindungen, die als Aktivatoren oder Promotoren bezeichnet werden, zu erhöhen (DE-A 15 42 415, DE-A 10 94 428, EP-A 0 160 203).

Eine der wirksamsten Absorptionsflüssigkeiten zur Entfernung von CO₂ und H₂S aus einem Gasstrom ist eine wässrige Lösung von Methyldiethanolamin (MDEA) und Piperazin als Absorptionsbeschleuniger oder -aktivator. Ein derartiges Absorptionsmittel ist bekannt aus US 4,336,233; EP 359991, WO 00/66249 und WO 00/00271.

In der US 5,618,506 ist ein Verfahren zur Entfernung von CO₂ aus einem Verbrennungsgas unter Verwendung eines Absorptionsmittels beschrieben, das ein Gemisch aus einem sekundären und einem tertiären Amin enthält. Bei dem tertiären Amin kann es sich um N-Methyldiethanolamin handeln und als sekundäres Amin werden Piperazin und an den Ringkohlenstoffatomen alkylsubstituierte Piperazine verwendet. Piperazine, die an dem oder den Stickstoffatomen substituiert sind, werden dagegen nicht in Betracht gezogen.

Die WO 99/02244 beschreibt ein Verfahren zur Entfernung saurer Gase aus Gasströmen unter Verwendung eines Absorptionsmittels, das ein Gemisch aus einem sekundären Alkanolamin, insbesondere Di-ethanolamin, und einem tertiären Alkanolamin, insbesondere Triethanolamin, enthält. Piperazinverbindungen werden nicht in Betracht gezogen.

Die US 5,098,681 und US 5,262,139 beschreiben Verfahren zur Entfernung von SO₂ aus Gasströmen, wobei Hydroxyethylpiperazin oder Bis(hydroxyethylpiperazin) als Absorptionsmittel verwendet wird.

Den Verfahren des Standes der Technik ist gemeinsam, dass sie nach wie vor hohen Energieaufwand und hohen Lösungsmittelumlauf erfordern. Zudem müssen Teile der Anlage aus Edelstahl gebaut werden, was zu hohen Anlagenkosten führt. Um hier eine Verbesserung zu erzielen, sind Absorptionsmittel mit höherer Absorptionskapazität und höherer Absorptionsgeschwindigkeit erforderlich, bei gleichzeitig verbessertem Korrosionsschutz.

Der vorliegenden Erfindung liegt daher die Aufgabe zugrunde, ein Absorptionsmittel mit höherer Absorptionskapazität und höherer Absorptionsgeschwindigkeit zu Verfügung zu stellen.

Überraschenderweise wurde nun gefunden, dass diese Aufgabe mit einem Absorptionsmittel gelöst wird, das ein tertiäres Amin und Hydroxyethylpiperazin oder Bis(hydroxyethylpiperazin) und Piperazin enthält.

Gegenstand der vorliegenden Erfindung ist daher ein Absorptionsmittel zur Entfernung von sauren Gasen aus Fluiden, insbesondere Gasströmen, das umfasst:
a) mindestens ein tertiäres Alkanolamin ausgewählt aus der Gruppe Methyldiethanolamin, Triethanolamin, Ethyldiethanolamin und Diethylethanolamin in einer Konzentration im Bereich von 15-60 Gewichtsprozent, bezogen auf das Gesamtgewicht des Absorptionsmittels;
b) ein Amin, das ausgewählt ist unter Hydroxyethylpiperazin, Bis(hydroxyethyl)piperazin oder einem Gemisch davon in einer Konzentration im Bereich von 1-10 Gewichtsprozent, bezogen auf das Gesamtgewicht des Absorptionsmittels; und
c) Piperazin in einer Konzentration im Bereich von 1-30 Gewichtsprozent, bezogen auf das Gesamtgewicht des Absorptionsmittels.

Gegenstand der Erfindung ist auch ein Verfahren zur Entfernung saurer Gase aus Fluiden, bei dem man in einem Absorptionsschritt einen die sauren Gase enthaltenden Fluidstrom mit dem erfindungsgemäßen wässrigen Absorptionsmittel in Kontakt bringt, wobei man einen an sauren Gasen angereicherten Fluidstrom und ein mit sauren Gasen angereichertes Absorptionsmittel erhält.

Weiterhin bestand die Aufgabe darin ein Absorptionsmittel-Konzentrat bereit zustellen, aus dem das Absorptionsmittel durch Wasserzugabe einfach herstellbar ist.

Es zeigen:
- Fig. 1: eine schematische Darstellung des Verfahrensablaufs einer Ausführungsform des erfindungsgemäßen Verfahrens mit einstufiger Absorption.
- Fig. 2: eine schematische Darstellung des Verfahrensablaufs einer Ausführungsform des erfindungsgemäßen Verfahrens mit zweistufiger Absorption.
- Fig. 3: die relative CO₂-Gleichgewichtsbeladung eines erfindungsgemäßen Absorptionsmittels relativ zu einem Absorptionsmittel des Standes der Technik.
- Fig. 4: die relative H₂S-Gleichgewichtsbeladung eines erfindungsgemäßen Absorptionsmittels relativ zu einem Absorptionsmittel des Standes der Technik.

Bei dem tertiären Alkanolamin kann es sich um ein Trialkanolamin, Alkyldialkanolamin oder Dialkylalkanolamin handeln. Die Alkylgruppen können geradkettig oder verzweigt sein und weisen im allgemeinen ein bis vier Kohlenstoffatome auf. Die Alkanolgruppen weisen im allgemeinen zwei bis vier Kohlenstoffatome auf. Beispiele für tertiäre Alkonolamine sind: Triethanolamin, Tributanolamin, Diethanolamin, Diethylethanolamin, Dimethylethanolamin, Dimethylpropanolamin und vorzugsweise Methyldiethanolamin (MDEA).

Hydroxyethylpiperazin und Bis(hydroxyethylpiperazin) kommen vorzugsweise im Gemisch zur Anwendung.

Der gesamte Amingehalt des erfindungsgemäßen Absorptionsmittels liegt im Allgemeinen im Bereich von 20 - 70 Gew.-%, vorzugsweise 20 - 60 Gew.-% und insbesondere 20 - 55 Gew.-%, bezogen auf das Gesamtgewicht des Absorptionsmittels.

Die Konzentration der Aminkomponente a) liegt im Bereich von 15 bis 60 Gew.-%, vorzugsweise 15 bis 55 Gew.-%, und insbesondere 15 bis 50 Gew.-%, bezogen auf das Gesamtgewicht des Absorptionsmittels.

Die Konzentration der Aminkomponente b) liegt im Bereich von 1 - 10 Gew.-%, vorzugsweise 1 - 8 Gew.-% und insbesondere 1 - 5 Gew.-%, bezogen auf das Gesamtgewicht des Absorptionsmittels.

Die Konzentration von Piperazin c) liegt im Bereich von 1 - 30 Gew.-%, vorzugsweise *1 - 20 Gew.-% und insbesondere 1 - 10 Gew.-%, bezogen auf das Gesamtgewicht des Absorptionsmittels. Der Anteil der Aminkomponente a) reduziert sich dann entsprechend, so dass die gesamte Anteil der Komponenten a) und c) am Gesamtgewicht des Absorptionsmittels in den für Komponente a) angegebenen Bereichen bleibt. Der Rest auf 100 Gew.-% kann Wasser sein.

Das Absorptionsmittel kann auch weitere zur Absorption von sauren Gasen geeignete Amine enthalten, beispielsweise Diethanolamin, Monomethylethanolamin, Diisopropanolamin, 3-Methylaminopropylamin etc (Aminkomponente d)). Wenn vorhanden, kann die Aminkomponente d) in einer Menge von etwa 1 bis 10, bevorzugt 1 bis 5 Gew.-%, bezogen auf das Gesamtgewicht des Absorptionsmittels, enthalten sein. Der Anteil der Aminkomponente a) reduziert sich dann entsprechend, so dass die gesamte Anteil der Komponenten a), c) und d) am Gesamtgewicht des Absorptionsmittels in den für Komponente a) angegebenen Bereichen bleibt.

Die Aminkomponenten b) und c) werden besonders günstig in Form einer Mischung bereitgestellt, die wie folgt zusammengesetzt ist.

| | |
|---|---|
| Hydroxyethylpiperazin: | 40 Gew.-% (35-45) |
| Bis(hydroxyethylpiperazin): | 20 Gew.-% (15-25 |
| Piperazin: | 15 Gew.-% (10-20) |
| Wasser: | Rest auf 100% |

Ein derartiges Gemisch fällt beispielsweise als Reaktionsaustrag bei der Hydroxyethylpiperazin-Synthese an und wird als CHEP (Crude Hydroxyethylpiperazin) bezeichnet.

Das Absorptionsmittel kann auch physikalische Lösungsmittel enthalten, wie Sulfolan, N-Methylpyrrolidon oder N-alkylierte Piperidone. Wenn vorhanden, können die physikalischen Lösungsmittel in einer Menge von etwa 5 - 20 Gew.-%, bezogen auf das Gesamtgewicht des Absorptionsmittels, enthalten sein.

Das Absorptionsmittel kann auch Additive, wie Korrosionsinhibitoren, Enzyme etc. enthalten. Im allgemeinen liegt die Menge an derartigen Additiven im Bereich von etwa 0,01-3 Gew.-% des Absorptionsmittels.

Das erfindungsgemäße Absorptionsmittel ist geeignet zur Behandlung von Fluiden, insbesondere Gasströmen aller Art. Bei den sauren Gasen handelt es sich insbesondere um CO₂, H₂S, COS und Mercaptane. Außerdem können auch SO₃, SO₂, CS₂ und HCN entfernt werden. Fluide, welche die sauren Gase enthalten, sind einerseits Gase, wie Erdgas, Synthesegas, Koksofengas, Kohlevergasungsgas, Kreisgas, Deponiegase und Verbrennungsgase, und andererseits mit dem Absorptionsmittel im Wesentlichen nicht mischbare Flüssigkeiten, wie LPG (Liquefied Petroleum Gas) oder NGL (Natural Gas Liquids). Die Fluidströme können neben einem oder mehreren der genannten sauren Gase weitere inerte Gasbestandteile, die von dem Absorptionsmittel nicht in nennenswertem Maße absorbiert werden, enthalten. Beispiele sind leichtflüchtige Kohlenwasserstoffe, bevorzugt C₁-C₄-Kohlenwasserstoffe, wie Methan, ferner Stickstoff und Wasserstoff. Das erfindungsgemäße Verfahren ist besonders zur Entfernung von CO₂ und H₂S geeignet.

Das erfindungsgemäße Absorptionsmittel ist zur Entfernung von sauren Gasen (im folgenden auch als saure Gasbestandteile bezeichnet) aus Gasen, die von dem Absorptionsmittel nicht selbst absorbiert werden und zur Extraktion saurer Gase aus Flüssigkeiten, die mit dem Absorptionsmittel im Wesentlichen nicht mischbar sind, geeignet. Nachfolgend werden der prinzipielle Verfahrensablauf für eine Gaswäsche sowie mögliche Varianten, die im Umfang der vorliegenden Erfindung liegen, beschrieben. Das Verfahren ist vom Fachmann problemlos auf Flüssigkeiten übertragbar. Die Regenerierung des Absorptionsmittels ist bei Flüssigkeiten und Gasen identisch.

Das an sauren Gasbestandteilen reiche Ausgangsgas (Rohgas) wird in einem Absorptionsschritt in einem Absorber in Kontakt mit dem erfindungsgemäßen Absorptionsmittel gebracht, wodurch die sauren Gasbestandteile zumindest teilweise ausgewaschen werden.

Als Absorber fungiert vorzugsweise eine in üblichen Gaswäscheverfahren eingesetzte Waschvorrichtung. Geeignete Waschvorrichtungen sind beispielsweise Füllkörper, Packungs- und Bodenkolonnen, Membrankontaktoren, Radialstromwäscher, Strahlwäscher, Venturi-Wäscher und Rotations-Sprühwäscher, bevorzugt Packungs-, Füllkörper- und Bodenkolonnen, besonders bevorzugt Packungs- und Füllkörperkolonnen. Die Behandlung des Fluidstroms mit dem Absorptionsmittel erfolgt dabei bevorzugt in einer Kolonne im Gegenstrom. Das Fluid wird dabei im Allgemeinen in den unteren Bereich und das Absorptionsmittel in den oberen Bereich der Kolonne eingespeist.

Die Temperatur des Absorptionsmittels beträgt im Absorptionsschritt im Allgemeinen etwa 40 bis 100°C, bei Verwendung einer Kolonne beispielsweise 40 bis 70°C am Kopf der Kolonne und 50 bis 100°C am Boden der Kolonne. Der Gesamtdruck beträgt im Absorptionsschritt im Allgemeinen etwa 1 bis 120 bar, bevorzugt etwa 10 bis 100 bar. Es wird ein an sauren Gasbestanteilen armes, d.h. ein an diesen Bestandteilen abgereichertes Produktgas (Reingas) und ein mit sauren Gasbestandteilen beladenes Absorptionsmittel erhalten.

Das erfindungsgemäße Verfahren kann einen oder mehrere, insbesondere zwei, aufeinanderfolgende Absorptionsschritte umfassen. Die Absorption kann in mehreren aufeinanderfolgenden Teilschritten durchgeführt werden, wobei das die sauren Gasbestandteile enthaltende Rohgas in jedem der Teilschritte mit jeweils einem Teilstrom des Absorptionsmittels in Kontakt gebracht wird. Das Absorptionsmittel, mit dem das Rohgas in Kontakt gebracht wird, kann bereits teilweise mit sauren Gasen beladen sein, d.h. es kann sich beispielsweise um ein Absorptionsmittel, das aus einem nachfolgenden Absorptionsschritt in den ersten Absorptionsschritt zurückgeführt wurde, oder um teilregeneriertes Absorptionsmittel handeln. Bezüglich der Durchführung der zweistufigen Absorption wird Bezug genommen auf die Druckschriften EP-A 0 159 495,
EP-A 0 190 434, EP-A 0 359 991 und WO 00/00271.

Gemäß einer bevorzugten Ausführungsform wird das erfindungsgemäße Verfahren so durchgeführt, dass das die sauren Gase enthaltende Fluid zunächst in einem ersten Absorptionsschritt mit dem Absorptionsmittel bei einer Temperatur von 40 bis 100°C, bevorzugt 50 bis 90°C und insbesondere 60 bis 90°C behandelt wird. Das an sauren Gasen abgereicherte Fluid wird dann in einem zweiten Absorptionsschritt mit dem Absorptionsmittel bei einer Temperatur von 30 bis 90°C, bevorzugt 40 bis 80°C und insbesondere 50 bis 80°C, behandelt. Dabei ist die Temperatur um 5 bis 20°C niedriger als in der ersten Absorptionsstufe.

Aus dem mit den sauren Gasbestandteilen beladenen Absorptionsmittel können die sauren Gasbestandteile in üblicher Weise (analog zu den nachfolgend zitierten Publikationen) in einem Regenerationsschritt freigesetzt werden, wobei ein regeneriertes Absorptionsmittel erhalten wird. Im Regenerationsschritt wird die Beladung des Absorptionsmittels verringert und das erhaltene regenerierte Absorptionsmittel wird vorzugsweise anschließend in den Absorptionsschritt zurückgeführt.

Im Allgemeinen beinhaltet der Regenerationsschritt mindestens eine Druckentspannung des beladenen Absorptionsmittels von einem hohen Druck, wie er bei der Durchführung des Absorptionsschritts herrscht, auf einen niedrigeren Druck. Die Druckentspannung kann beispielsweise mittels eines Drosselventils und/oder einer Entspannungsturbine geschehen. Die Regeneration mit einer Entspannungsstufe ist beispielsweise beschrieben in den Druckschriften US 4,537,753 und US 4,553,984.

Die Freisetzung der sauren Gasbestandteile im Regenerationsschritt kann beispielsweise in einer Entspannungskolonne, z.B. einem senkrecht oder waagerecht eingebauten Flash-Behälter oder einer Gegenstromkolonne mit Einbauten, erfolgen. Es können mehrere Entspannungskolonnen hintereinandergeschaltet werden, in denen bei unterschiedlichen Drücken regeneriert wird. Beispielsweise kann in einer Vorentspannungskolonne bei hohem Druck, der typischerweise ca. 1,5 bar oberhalb des Partialdrucks der sauren Gasbestandteile im Absorptionsschritt liegt, und in einer Hauptentspannungskolonne bei niedrigem Druck, beispielsweise 1 bis 2 bar absolut, regeneriert werden. Die Regeneration mit zwei oder 30 mehr Entspannungsstufen ist beschrieben in den Druckschriften US 4,537,753, US 4,553,984, EP-A 0 159 495, EP-A 0 202 600, EP-A 0 190 434 und EP-A 0 121 109.

Eine Verfahrensvariante mit zwei Niederdruckentspannungsstufen (1 bis 2 bar absolut), bei der die in der ersten Niederdruckentspannungsstufe teilregenerierte Absorptionsflüssigkeit erwärmt wird, und bei der gegebenenfalls vor der ersten Niederdruckentspannungsstufe eine Mitteldruckentspannungsstufe vorgesehen wird, bei der auf mindestens 3 bar entspannt wird, ist in DE 100 28 637 beschrieben. Dabei wird die beladene Absorptionsflüssigkeit zunächst in einer ersten Niederdruckentspannungsstufe auf einen Druck von 1 bis 2 bar (absolut) entspannt. Anschließend wird die teilregenerierte Absorptionsflüssigkeit in einem Wärmetauscher erwärmt und dann in einer zweiten Niederdruckentspannungsstufe erneut auf einen Druck von 1 bis 2 bar (absolut) entspannt.

Die letzte Entspannungsstufe kann auch unter Vakuum durchgeführt werden, das beispielsweise mittels eines Wasserdampfstrahlers, gegebenenfalls in Kombination mit einem mechanischen Vakuumerzeugungsapparat, erzeugt wird, wie beschrieben in EP-A 0159495, EP-A 0 202 600, EP-A 0190 434 und EP-A 0 121 109 (US 4,551,158).

Wegen der optimalen Abstimmung des Gehalts an den Aminkomponenten weist das erfindungsgemäße Absorptionsmittel eine hohe Beladbarkeit mit sauren Gasen auf, die auch leicht wieder desorbiert werden können. Dadurch können bei dem erfindungsgemäßem Verfahren der Energieverbrauch und der Lösungsmittelumlauf signifikant reduziert werden.

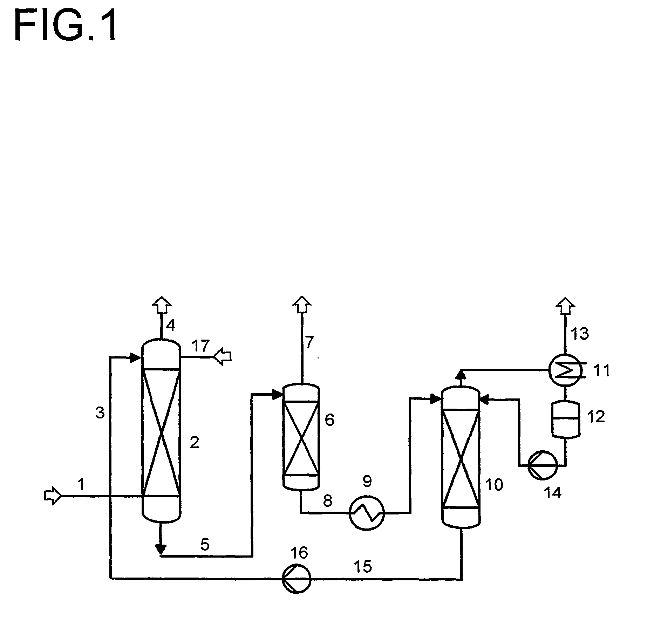

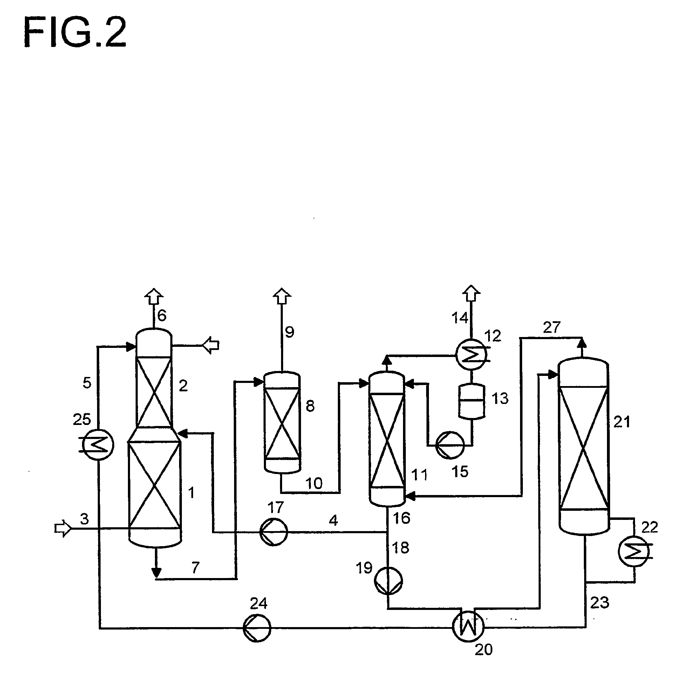

Das erfindungsgemäße Verfahren wird nachfolgend anhand der Figuren 1 und 2 erläutert.

In Figur 1 ist schematisch eine Vorrichtung dargestellt, bei der die Absorptionsstufe einstufig und die Entspannungsstufe zweistufig durchgeführt werden. Das Feedgas wird über Leitung 1 in den unteren Bereich des Absorbers 2 eingespeist. Beim Absorber 2 handelt es sich um eine Kolonne, die mit Füllkörpern gepackt ist, um den Massen- und Wärmeaustausch zu bewirken. Das Absorptionsmittel, bei dem es sich um regeneriertes Absorptionsmittel mit einem geringen Restgehalt an sauren Gasen handelt, wird über die Leitung 3 auf den Kopf des Absorbers 2 im Gegenstrom zu dem Feedgas aufgegeben. Das an sauren Gasen abgereicherte Gas verlässt den Absorber 2 über Kopf (Leitung 4). Das mit sauren Gasen angereicherte Absorptionsmittel verlässt den Absorber 2 am Boden über Leitung 5 und wird in den oberen Bereich der Hochdruck-Entspannungskolonne 6 eingeleitet, die im Allgemeinen bei einem Druck betrieben wird, der oberhalb des CO₂-Partialdrucks des dem Absorber zugeführten Rohgases liegt. Die Entspannung des Absorptionsmittels erfolgt im Allgemeinen mit Hilfe üblicher Vorrichtungen, beispielsweise eines Stand-Regelventils, einer hydraulischen Turbine oder einer umgekehrt laufenden Pumpe. Bei der Entspannung wird der größte Teil der gelösten nicht-sauren Gase sowie ein kleiner Teil der sauren Gase freigesetzt. Diese Gase werden über Leitung 7 aus der Hochdruck-Entspannungskolonne 6 über Kopf ausgeschleust.

Das Absorptionsmittel, das nach wie vor mit dem Großteil der sauren Gase beladen ist, verlässt die Hochdruck-Entspannungskolonne über Leitung 8 und wird im Wärmetauscher 9 aufgeheizt, wobei ein kleiner Teil der sauren Gase freigesetzt werden kann. Das aufgeheizte Absorptionsmittel wird in den oberen Bereich einer Niederdruck-Entspannungskolonne 10 eingeleitet, die mit einer Füllkörperpackung ausgerüstet ist, um eine große Oberfläche zu erzielen und so die Freisetzung des CO₂ und die Einstellung des Gleichgewichts zu bewirken. In der Niederdruck-Entspannungskolonne 10 werden der größte Teil des CO₂ und das H₂S praktisch vollständig durch Flashen freigesetzt. Das Absorptionsmittel wird auf diese Weise gleichzeitig regeneriert und abgekühlt. Am Kopf der Niederdruck-Entspannungskolonne 10 ist ein Rückflusskühler 11 mit einem Auffangbehälter 12 vorgesehen, um die freigesetzten sauren Gase zu kühlen und einen Teil des Dampfes zu kondensieren. Die Hauptmenge des sauren Gases verlässt den Rückflusskühler 11 über Leitung 13. Das Kondensat wird mittels Pumpe 14 auf den Kopf der Niederdruck-Entspannungskolonne 10 zurückgepumpt. Das regenerierte Absorptionsmittel, das noch einen geringen Teil des CO2 enthält, verlässt die Niederdruck-Entspannungskolonne 10 am Boden über Leitung 15 und wird mittels Pumpe 16 über Leitung 3 auf den Kopf des Absorbers 2 aufgegeben. Über Leitung 17 kann Frischwasser zum Ausgleich des mit den Gasen ausgetragenen Wassers eingespeist werden.

Figur 2 zeigt schematisch eine Vorrichtung zur Durchführung des erfindungsgemäßen Verfahrens unter Verwendung eines zweistufigen Absorbers und einer zweistufigen Entspannung. Der Absorber umfasst den Rohabsorber 1 und den Reinabsorber 2. Das Feedgas wird über Leitung 3 in den unteren Bereich des Rohabsorbers 1 eingespeist und im Gegenstrom mit regeneriertem Absorptionsmittel behandelt, das über Leitung 4 auf den Kopf des Rohabsorbers 1 aufgegeben wird und noch etwas saure Gase enthält. Auf den Kopf des Reinabsorbers 2 wird über Leitung 5 regeneriertes Absorptionsmittel aufgegeben, das im Wesentlichen keine sauren Gase mehr enthält. Beide Teile des Absorbers enthalten eine Packung, um den Massen- und Wärmeaustausch zwischen Rohgas und Absorptionsmittel zu bewirken. Das behandelte Gas verlässt den Reinabsorber 2 über Kopf (Leitung 6). Das mit sauren Gasen beladene Absorptionsmittel wird am Boden des Rohabsorbers 1 ausgetragen und über Leitung 7 in den oberen Bereich der Hochdruck-Entspannungskolonne 8 eingespeist. Die Kolonne 8 ist mit einer Packung ausgerüstet und wird bei einem Druck betrieben, der zwischen dem Druck im Absorber und der nachfolgenden Niederdruck-Entspannungskolonne 11 liegt. Die Entspannung des mit sauren Gasen beladenen Absorptionsmittels erfolgt mit Hilfe üblicher Vorrichtungen, beispielsweise eines Stand-Regelventils, einer hydraulischen Turbine oder einer umgekehrt laufenden Pumpe. Bei der Hochdruckentspannung wird der größte Teil der gelösten nicht-sauren Gase sowie ein kleiner Teil der sauren Gase freigesetzt. Diese Gase werden über Leitung 9 aus der Hochdruck-Entspannungskolonne 8 über Kopf ausgeschleust.

Das Absorptionsmittel, das nach wie vor mit dem Großteil der sauren Gase beladen ist, verlässt die Hochdruck-Entspannungskolonne 8 über Leitung 10 und wird in den oberen Bereich der Niederdruck-Entspannungskolonne 11 eingespeist, wo der größte Teil des CO2 und H2S durch Flashen freigesetzt werden. Das Absorptionsmittel wird auf diese Weise regeneriert. Die Niederdruck-Entspannungskolonne 11 ist mit einer Packung ausgestattet, um eine große Oberfläche für den Wärme- und Massenübergang bereitzustellen. Am Kopf der Niederdruck-Entspannungskolonne 11 ist ein Rückflusskühler 12 mit Kondensatbehälter 13 vorgesehen, um die über Kopf aus der Niederdruck-Entspannungskolonne 11 austretenden sauren Gase zu kühlen und einen Teil des Dampfes zu kondensieren. Das nicht kondensierte Gas, das die Hauptmenge der sauren Gase enthält, wird über Leitung 14 ausgetragen. Das Kondensat aus dem Kondensatbehälter 13 wird über Pumpe 15 auf den Kopf der Niederdruck-Entspannungskolonne 11 aufgegeben.

Das teilregenerierte Absorptionsmittel, das noch einen Teil der sauren Gase enthält, verlässt die Niederdruck-Entspannungskolonne 11 am Boden über Leitung 16 und wird in zwei Teilströme aufgespalten. Der größere Teilstrom wird über Pumpe 17 und Leitung 4 auf den Kopf des Rohabsorbers 1 aufgegeben, wohingegen der kleinere Teil über Leitung 18 mittels Pumpe 19 im Wärmetauscher 20 aufgeheizt wird. Das aufgeheizte Absorptionsmittel wird dann in den oberen Bereich des Strippers 21 eingespeist, der mit einer Packung ausgestattet ist. Im Stripper 21 wird der größte Teil des absorbierten CO₂ und H₂S mittels Dampf ausgestrippt, welcher im Reboiler 22 erzeugt und in den unteren Bereich des Strippers 21 eingespeist wird. Das den Stripper 21 am Boden über Leitung 23 verlassende Absorptionsmittel weist einen nur geringen Restgehalt an sauren Gasen auf. Es wird über den Wärmetauscher 20 geleitet, wobei das aus der Niederdruck-Entspannungskolonne 11 kommende, teilregenerierte Absorptionsmittel aufgeheizt wird. Das gekühlte, regenerierte Absorptionsmittel wird mittels Pumpe 24 über Wärmetauscher 25 zurück auf den Kopf des Reinabsorbers 2 gepumpt. Über Leitung 26 kann auf den Kopf des Reinabsorbers 2 Frischwasser aufgegeben werden, um das durch die Gasströme ausgetragene Wasser zu ersetzen. Das aus dem Stripper 21 über Kopf austretendes Gas wird über Leitung 27 in den unteren Bereich der Niederdruck-Entspanntungskolonne 11 eingespeist.

### Beispiel 1

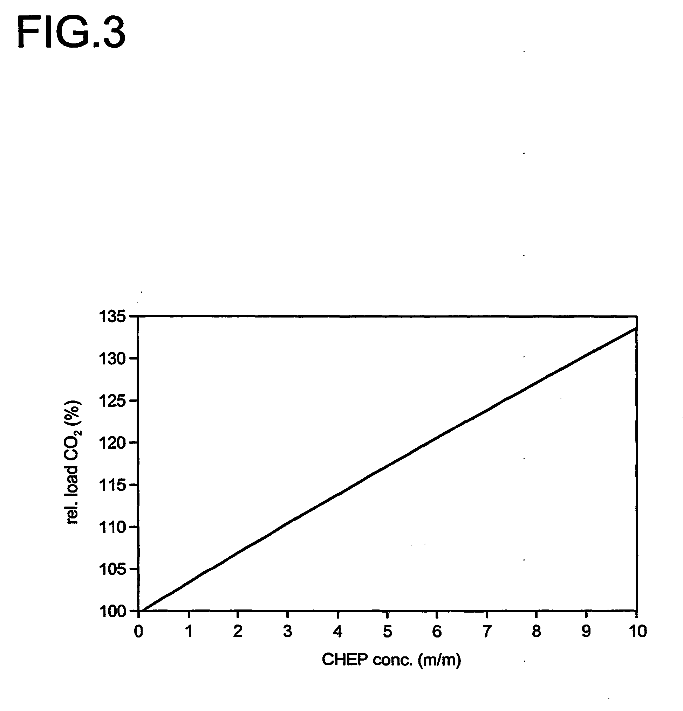

Es wurden Berechnungen mit einem Phasengleichgewichtsmodell (Pitzer-Modell; Kenneth S. Pitzer, Activity Coefficients in Elektrolyt Solutions 2nd Ed., CRC-Press, 1991, Chapt. 3, Ion Interaction Approach: Theory and Data Correlation; die Parameter des Modells wurden an Phasengleichgewichtsmessungen im System CO₂/H₂O/MDEA/Piperazin/CHEP angepasst) durchgeführt. Es wurde ein wässriges Absorptionsmittel zugrunde gelegt, das CHEP in steigenden Mengen gelöst in einer Mischung aus 5 Gew.-% Piperazin, 35 Gew.-% MDEA und Wasser enthält. Figur 3 zeigt die relative CO₂-Gleichgewichtsbeladung des erfindungsgemäßen Absorptionsmittels im Verhältnis zur CO₂-Gleichgewichtsbeladung eines Absorptionsmittels, das 5 Gew.-% Piperazin, 35 Gew.-% MDEA und 60 Gew.-% Wasser enthält. Es ist ersichtlich, dass das erfindungsgemäße Absorptionsmittel im gesamten Bereich eine höhere Beladbarkeit mit CO₂ aufweist als das Vergleichsabsorptionsmittel. Durch Erhöhung des CHEP-Gehalts auf 10 Gew.-% kann die Beladbarkeit mit CO₂ bei den gewählten Bedingungen um etwa 35% erhöht werden.

### Beispiel 2

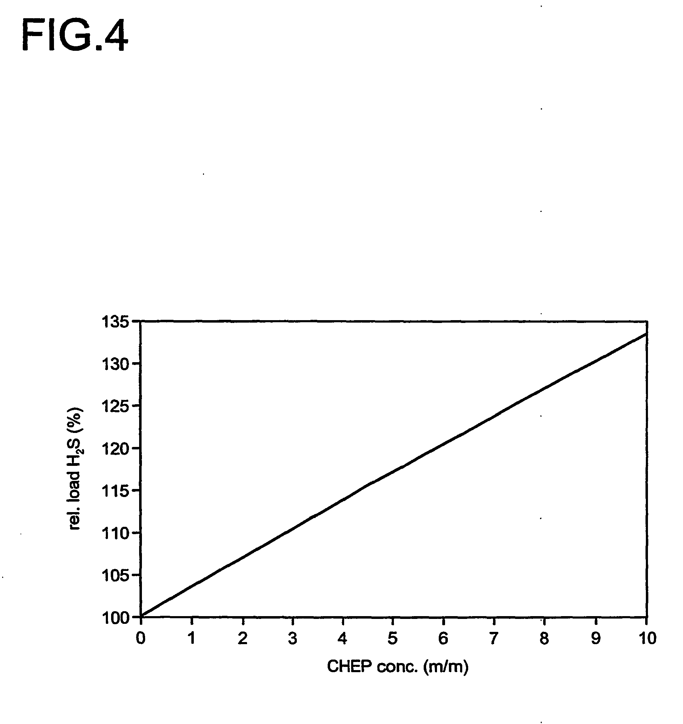

Die H₂S-Gleichgewichtsbeladung wurde analog zu Beispiel 1 bestimmt. Die Ergebnisse sind in der Figur 4 gezeigt. Es ist ersichtlich, dass das erfindungsgemäße Absorptionsmittel im gesamten Bereich eine höhere Beladbarkeit mit H₂S aufweist als das Vergleichsabsorptionsmittel.

### Beispiel 3

Es wurde die relative Stoffübergangsgeschwindigkeit von CO₂ in ein Absorptionsmittel, das 5 Gew.-% CHEP, 5 Gew.-% Piperazin, 30 Gew.-% MDEA und 60 Gew.-% Wasser enthält, im Verhältnis zur CO₂-Stoffübergangsgeschwindigkeit eines Absorptionsmittels untersucht, das 5 Gew.-% Piperazin, 35 Gew.-% MDEA und 60 Gew.-% Wasser enthält. Die Stoffübergangsgeschwindigkeit wurde in einer Laminarstrahlkammer mit Wasserdampf gesättigtem Sauergas bei 1 bar und 70°C, Strahldurchmesser 0,94 mm, Strahllänge 1-8 cm, Volumenstrom des Absorptionsmittels 1,8 ml/s, bestimmt und die Gasvolumina in Normalkubikmeter pro Oberfläche des Absorptionsmittels, Druck und Zeit ermittelt (Nm³/m²/bar/h).

Unter hier verwendeten Bedingungen (T = 70°C; pCO₂ = 0,7 bar) ergab sich eine CO₂-Stoffübergangsgeschwindigkeit für das erfindungsgemäße Absorptionsmittel von 24,5 Nm³/m²/bar/h und für das Vergleichsabsorptionsmittel von 17,4 Nm³/m²/bar/h.

Relativ zum Vergleichsabsorptionsmittel ergab sich damit eine um 40 % höhere Stoffübergangsgeschwindigkeit.

Dieses Gemisch wurde in einer gemäß Figur 1 arbeitenden Anlage im industriellen Maßstab erprobt.
a) Aufgrund der höheren Beladungskapazität und -geschwindigkeit ließ sich eine reduzierte LM-Umlaufmenge erreichen. Diese führte zu deutlich niedrigerem spezifischen Energiebedarf für die Regenerierung. Die Reboiler duty steam flow veränderte sich durch den Wechsel des Absorptionsmittels von 130 lb/h auf 90 lb/h.
b) Gleichzeitig konnte in der bestehenden Anlage die Korrosionsneigung signifikant reduziert werden. Der Fe-Gehalt im Absorptionsmittel erniedrigte sich durch den Wechsel des Absorptionsmittels von 30 auf 5 ppm.

## Patentansprüche

1. Absorptionsmittel zur Entfernung von sauren Gasen aus Fluiden, umfassend
a) mindestens ein tertiäres Alkanolamin ausgewählt aus der Gruppe Methyldiethanolamin, Triethanolamin, Ethyldiethanolamin und Diethylethanolamin in einer Konzentration im Bereich von 15-60 Gewichtsprozent, bezogen auf das Gesamtgewicht des Absorptionsmittels;
b) ein Amin, das ausgewählt ist unter Hydroxyethylpiperazin, Bis(hydroxyethyl)piperazin oder einem Gemisch davon in einer Konzentration im Bereich von 1-10 Gewichtsprozent, bezogen auf das Gesamtgewicht des Absorptionsmittels; und
c) Piperazin in einer Konzentration im Bereich von 1-30 Gewichtsprozent, bezogen auf das Gesamtgewicht des Absorptionsmittels.

2. Absorptionsmittel nach Anspruch 1, das Methyldiethanolamin, Piperazin und ein Gemisch aus Hydroxyethylpiperazin und Bis(hydroxyethyl)piperazin umfasst.

3. Absorptionsmittel nach Anspruch 1 oder 2, bei dem der Gesamtamingehalt im Bereich von 20-70 Gewichtsprozent, bezogen auf das Gesamtgewicht des Absorptionsmittels, liegt.

4. Absorptionsmittel nach einem der vorhergehenden Ansprüche, das zusätzlich ein physikalisches Lösungsmittel für saure Gase enthält.

5. Verfahren zur Absorption von sauren Gasen aus Fluidströmen, wobei man den Fluidstrom mit einem Absorptionsmittel gemäß einem der Ansprüche 1-4 in Kontakt bringt, wobei man einen an sauren Gasen abgereicherten Fluidstrom und ein mit sauren Gasen beladenes Absorptionsmittel erhält.

## Claims

1. An absorbent for removing acid gases from fluids, comprising
a) at least one tertiary alkanolamine selected from the group consisting of methyldiethanolamine, triethanolamine, ethyldiethanolamine and diethylethanolamine, in a concentration in the range 15 - 60 percent by weight, based on the total weight of the absorbent;
b) an amine which is selected from hydroxyethylpiperazine, bis(hydroxyethyl)-piperazine or a mixture thereof, in a concentration in the range 1 - 10 percent by weight, based on the total weight of the absorbent; and
c) piperazine in a concentration in the range 1 - 30 percent by weight, based on the total weight of the absorbent.

2. The absorbent according to claim 1 which comprises methyldiethanolamine, piperazine and a mixture of hydroxyethylpiperazine and bis(hydroxyethyl-piperazine).

3. The absorbent according to claim 1 or 2 in which the total amine content is in the range 20 - 70 percent by weight, based on the total weight of the absorbent.

4. The absorbent according to any one of the preceding claims which additionally comprises a physical solvent for acid gases.

5. A process for absorbing acid gases from fluid streams in which the fluid stream is contacted with an absorbent according to any one of claims 1 - 7, a fluid stream depleted in acid gases and an absorbent loaded with acid gases being obtained.

## Revendications

1. Agent absorbant pour éliminer des gaz acides de fluides, comprenant :
a) au moins une alcanolamine tertiaire choisie dans le groupe constitué de la méthyldiéthanolamine, de la triéthanolamine, de l'éthyldiéthanolamine et de la diéthyléthanolamine en concentration dans la plage de 15 à 60 pour-cent en poids par rapport au poids total de l'agent absorbant;
b) une amine, qui est choisie parmi l'hydroxyéthylpipérazine, la bis(hydroxyéthyl)-pipérazine ou un de leurs mélanges en concentration dans la plage de 1 à 10 pour-cent en poids par rapport au poids total de l'agent absorbant; et
c) de la pipérazine en concentration dans la plage de 1 à 30 pour-cent en poids par rapport au poids total de l'agent absorbant.

2. Agent absorbant selon la revendication 1, qui comprend de la méthyldiéthanolamine, de la pipérazine et un mélange d'hydroxyéthylpipérazine et de bis(hydroxyéthyl)pipérazine.

3. Agent absorbant selon la revendication 1 ou 2, dans lequel la teneur totale en amine se situe dans la plage de 20 à 70 pour-cent en poids par rapport au poids total de l'agent absorbant.

4. Agent absorbant selon l'une quelconque des revendications précédentes, qui contient en plus un solvant physique pour gaz acides.

5. Procédé d'absorption de gaz acides de courants de fluides en mettant en contact le courant de fluide avec un agent absorbant selon l'une quelconque des revendications 1 à 4, dans lequel on obtient un courant de fluide appauvri en gaz acides et un agent absorbant chargé en gaz acides.
